# EUROPÄISCHE PATENTANMELDUNG

(11) **EP 3 919 765 A1**
(43) Veröffentlichungstag der Anmeldung: **08.12.2021**
(21) Anmeldenummer: 21177070.6
(22) Anmeldetag: 01.06.2021
(51) Int. Cl.: F16B 45/02, A63B 29/00, A62B 35/00

(54) **SICHERHEITSKARABINER ZUM ANLEGEN AN EIN SEILELEMENT**

(30) Priorität: 03.06.2020 AT 504802020
(71) Anmelder: Winkler, Stefan, 1020 Wien (AT)
(72) Erfinder: WINKLER, Stefan, 1020 WIEN (AT); PLESSL, Niklas, 1150 WIEN (AT)
(74) Vertreter: Babeluk, Michael

(57) **Zusammenfassung**

Die Erfindung betrifft einen Sicherheitskarabiner (1) zum Anlegen an ein Seilelement (11), vorzugsweise zum Einsatz an fest verlegten Drahtseilen an Klettersteigen, mit einem Grundkörper (2), der einen Karabinerhaken (3) aufweist, mit einem am Grundkörper (2) angelenkten, in Schließrichtung federbelasteten Schnapper (4), der in Schließstellung am freien Ende des Karabinerhakens (3) anliegt, wobei der Schnapper (4) dazu ausgebildet ist, in Offenstellung einen Aufnahmebereich (6) des Karabiners (1) für die Aufnahme des Seilelements (11) freizugeben, und wobei innerhalb des Aufnahmebereichs (6) eine auf das Seilelement (11) wirkende Seilbremseinrichtung (10) angeordnet ist, deren Eingriff auf das Seilelement (11) bei Betätigung eines an der Rückseite des Karabiners (1) angeordneten Drückerelements (9) lösbar ist. Am Sicherheitskarabiner (1) ist ein bevorzugt mit dem Daumen betätigbarer Sperrhebel (5) für die Freigabe des Schnappers (4) aus dessen Schließstellung angeordnet, wobei das Drückerelement (9) der Seilbremseinrichtung (10) unabhängig von der Stellung des Sperrhebels (5) für den Schnapper (4) betätigbar ist.

## Beschreibung

Die Erfindung betrifft einen Sicherheitskarabiner zum Anlegen an ein Seilelement, vorzugsweise zum Einsatz an fest verlegten Drahtseilen an Klettersteigen, mit einem Grundkörper, der einen Karabinerhaken aufweist, mit einem am Grundkörper angelenkten, in Schließrichtung federbelasteten Schnapper, der in Schließstellung am freien Ende des Karabinerhakens anliegt, wobei der Schnapper dazu ausgebildet ist, in Offenstellung einen Aufnahmebereich des Karabiners für die Aufnahme des Seilelements freizugeben, und wobei innerhalb des Aufnahmebereichs eine auf das Seilelement wirkende Seilbremseinrichtung angeordnet ist, deren Eingriff auf das Seilelement bei Betätigung eines an der Rückseite des Karabiners angeordneten Drückerelements lösbar ist. Weiters betrifft die Erfindung ein Klettersteigset mit Sicherheitskarabinern.

Versicherte Klettersteige können mit einem fixen Stahlseil gesichert sein, in das sich die Klettersportler mit Karabinern einhängen und somit gesichert sind (siehe beispielsweise Klettersteigkarabiner gemäß EP 2 532 394 B1). Im Falle eines Absturzes sichert der Karabiner die Fallbewegung und das elastische Sicherungsseil des Karabiners (vorzugsweise mit Fallbanddämpfer), das am Hüftgurt des Kletterers befestigt wird, bremst den Sturz. Problematisch dabei ist, dass die Abstände der Verankerungspunkte der Stahlseile in Klettersteigen oft bis zu fünf Meter voneinander entfernt sind - d.h. im Falle eines Absturzes stürzt der Sportler im freien Fall bis zum nächsten Verankerungspunkt, erst dann greift der Karabiner und bremst den Sturz. Auch bei Verwendung eines Klettersteigsets (beispielsweise in Y-Form mit einem Fangstoßdämpfer und zwei davon ausgehenden Sicherungsseilen, die jeweils in einem Kletterkarabiner enden) ändert sich daran nichts, da bei einem Sturz kurz vor einem Verankerungspunkt beide Karabiner ungebremst bis zum nächsten Verankerungspunkt abrutschen.

Um den freien Fall abzumindern, haben unterschiedliche Anbieter Sicherungseinrichtungen für Klettersteige entwickelt (beispielsweise die Seilklemme "Ferrata Bloc" von AUSTRIALPIN), die direkt am Stahlseil eingehakt werden kann und sich im Falle eines Absturzes verklemmen. Die AT 511.556 B1 beschreibt eine derartige Sicherungseinrichtung, deren Grundkörper eine Aufnahmeöffnung zum Hindurchführen des Drahtseils aufweist, wobei ein Klemmer zum Festklemmen des Drahtseiles in die Aufnahmeöffnung einführbar ist. Der Klemmer ist außermittig bzw. exzentrisch zwischen den Begrenzungskanten der Aufnahmeöffnung angeordnet. Hierdurch wird zwischen Drahtseil und Grundkörper der Sicherungseinrichtung ein relativ kleiner Winkel realisiert, wenn man die in das Drahtseil eingehängte Sicherungseinrichtung in die eine Richtung gegen das Seil verkippt. In dieser Stellung kann die Sicherungseinrichtung mit relativ wenig Kraftaufwand am Drahtseil entlang mitgeführt werden. Bei einem Kippen in die Gegenrichtung der am Drahtseil eingehängten Sicherungseinrichtung wird hingegen ein großer Winkel realisiert. In dieser Stellung klemmt die ausschließlich als Seilbremse wirkende Sicherungseinrichtung am Drahtseil, womit ein Sturz des Kletterers abgefangen wird. Bei einem Versagen dieser Sicherheitseinrichtung, beispielsweise wenn bei einem Sturz das eingelegte Drahtseil aus der Aufnahmeöffnung herausgerissen wird, besteht jedoch keine weitere Sicherungsebene.

Aus der DE 20 2011 002 181 U1 ist eine Blockier-Bremse bekannt, welche mit ihrer Aufnahmeöffnung direkt in das Drahtseil des Klettersteigs eingehängt werden kann und bei einem Sturz des Kletterers unmittelbar zu einem Verklemmen und damit zu einem Abbremsen führen soll.

Die oben beschriebenen Sicherungs- bzw. Bremseinrichtungen werden daher zur Realisierung eines zweistufigen Sicherheitskonzepts immer als Zusatz zum normalen Klettersteigset mit zwei Karabinern verwendet, welche dann beispielsweise an einem dritten Sicherungsseil des Klettersteigsets eine Seilklemme bzw. Seilbremse aufweisen. Nachteilig dabei sind das zusätzliche Gewicht sowie die umständliche Handhabung beim Erreichen eines Verankerungspunktes, da nun zwei Karabiner und die Seilklemme bzw. Seilbremse auf den neuen Seilabschnitt umgehängt werden müssen.

Schließlich ist aus der WO 2018/107194 A1 ein Sicherheitskarabiner zum Anlegen an ein Seilelement bekannt geworden, bei welchem innerhalb des Aufnahmebereichs des Karabinerhakens eine auf das Seilelement wirkende Seilbremseinrichtung angeordnet ist. Die Seilbremseinrichtung ist somit direkt in den Sicherheitskarabiner integriert, wobei durch das Einhängen des Karabiners in das Stahlseil gleichzeitig eine Aufnahme des Stahlseils in die Bremseinrichtung erfolgt, und ein zweistufiges Sicherheitskonzept mit Hilfe nur eines Sicherheitskarabiners realisiert werden kann. Die Seilbremseinrichtung weist - ähnlich wie bei der AT 511 556 B1 - zwei asymmetrisch auf das eingelegte Seilelement wirkende Klemmelemente auf, derart, dass die Klemmelemente bei einer Kletterbewegung das Seilelement frei geben und bei einer der Richtung der Kletterbewegung entgegengesetzten Fallbewegung bremsend in das Seilelement eingreifen. Die Handhabung des Sicherheitskarabiners gemäß WO 2018/107194 A1 wird dadurch vereinfacht, dass ein einziger Sicherungshebel an der Rückseite des Karabiners angeordnet ist, bei dessen Betätigung der Schnapper des Karabiners und ein bewegliches Klemmelement der Bremseinrichtung gleichzeitig freigegeben werden.

Diese einfache Handhabung birgt jedoch auch Nachteile, da damit auf unterschiedliche Streckenabschnitte in Klettersteigen oder Klettergärten, wo teilweise nur mit der einfachen Seilsicherung und teilweise kombiniert mit der Seilbremseinrichtung geklettert wird, nicht rasch und flexibel reagiert werden kann.

Die Aufgabe der Erfindung besteht nun darin, einen Sicherheitskarabiner zum Anlegen an ein Seilelement mit einer integrierten Seilbremseinrichtung derart zu verbessern, dass die genannten Nachteile vermieden werden. Insbesondere sollen eine flexiblere Anpassung des Karabiners an unterschiedliche Abschnitte versicherter Klettersteige bei einer einfachen Einhand-Betätigung sowie ein robuster Aufbau gewährleistet sein.

Erfindungsgemäß wird dies dadurch erreicht, dass am Sicherheitskarabiner ein separater Sperrhebel für die Freigabe des Schnappers aus dessen Schließstellung angeordnet ist, wobei das Drückerelement der Seilbremseinrichtung unabhängig von der Stellung des Sperrhebels für den Schnapper betätigbar ist.

Bei der Handhabung des Karabiners wird dieser mit dem Drückerelement am Daumenballen der Hand anliegend gehalten, wobei die Finger der Hand den Schnapper umfassen und bevorzugt mit dem Daumen derselben Hand der Sperrhebel des Schnappers mittels Einhand-Betätigung betätigt werden kann.

Es ist auch möglich, als Sperrelement zur separaten Freigabe des Schnappers einen seitlich am Karabiner angeordneten, in Schließstellung federbelasteten Sperrschieber zu verwenden.

Wie weiter unten noch im Detail dargelegt wird, kann nun - ohne Betätigung des Sperrhebels - durch eine Druckbewegung zwischen Daumenballen und Finger einer Hand die Seilbremseinrichtung (zweite Sicherheitsebene) geöffnet werden, um das Seilelement in den Aufnahmebereich des Sicherheitskarabiners bei geschlossenem Schnapper (erste Sicherheitsebene) zu entlassen. In gleicher Weise kann das Seilelement - falls erforderlich - wieder in die Seilbremseinrichtung aufgenommen werden.

Wenn nun der Sicherheitskarabiner aus der Seilsicherung zur Gänze entfernt werden soll, wird der Sperrhebel des Schnappers mit dem Daumen betätigt und durch eine Druckbewegung zwischen Daumenballen und Finger die Seilbremseinrichtung geöffnet. Das Seilelement kann dann aus der Seilbremseinrichtung und aus dem Aufnahmebereich des Sicherheitskarabiners austreten.

Gemäß einer bevorzugten Ausführungsvariante der Erfindung ist das Drückerelement als ein Arm eines zweiseitigen, im Grundkörper angelenkten Klemmhebels ausgebildet ist, dessen zweiter Arm als bewegliches, auf das Seilelement wirkendes Klemmelement der Seilbremseinrichtung ausgebildet ist. Der Klemmhebel ist in Schließrichtung der Seilbremse federbelastet im Karabiner angeordnet, wobei das Drückerelement an der Rückseite des Karabiners angeordnet ist.

Erfindungsgemäß ist der in Schließstellung federbelastete Sperrhebel am Grundkörper drehbar angelenkt und greift mit einem Führungsstift an dessen freiem Ende in eine am Schnapper ausgebildete Führungskulisse ein. Nach dem Loslassen des geöffneten Schnappers kehrt dieser federbelastet in seine Schließstellung zurück und wird gleichzeitig durch den federbelasteten Sperrhebel verriegelt.

Es ist auch denkbar, den Sperrhebel am Schnapper drehbar anzulenken und die entsprechende Führungskulisse im Grundkörper auszubilden.

Die Erfindung wird im Folgenden an Hand eines Ausführungsbeispiels näher erläutert. Es zeigen teilweise schematisch dargestellt:
- Fig. 1: einen erfindungsgemäßen Sicherheitskarabiner in einer seitlichen Draufsicht in Schließstellung mit einem Seilelement in der Seilbremseinrichtung;
- Fig. 2: den Sicherheitskarabiner gemäß Fig. 1 in einer Schnittdarstellung in der Symmetrieebene des Karabiners nach Linie II-II in Fig. 3;
- Fig. 3: den Sicherheitskarabiner gemäß Fig. 1 in einer Draufsicht gemäß Pfeil III in Fig. 1;
- Fig. 4: den Sicherheitskarabiner gemäß Fig. 1 in einer seitlichen Draufsicht in Schließstellung mit einem Seilelement im Aufnahmebereich des Karabiners;
- Fig. 5: den Sicherheitskarabiner gemäß Fig. 1 in einer seitlichen Draufsicht in Offenstellung bereit zur Aufnahme eines Seilelements;
- Fig. 6: den Sicherheitskarabiner in Offenstellung gemäß Fig. 5 in einer Schnittdarstellung in der Symmetrieebene;
- Fig. 7: den Sicherheitskarabiner in einer Schnittdarstellung parallel zur Symmetrieebene des Karabiners gemäß Linie VII-VII in Fig. 3; sowie
- Fig. 8: den Sicherheitskarabiner in einer Schnittdarstellung gemäß Linie VIII-VIII in Fig. 1.

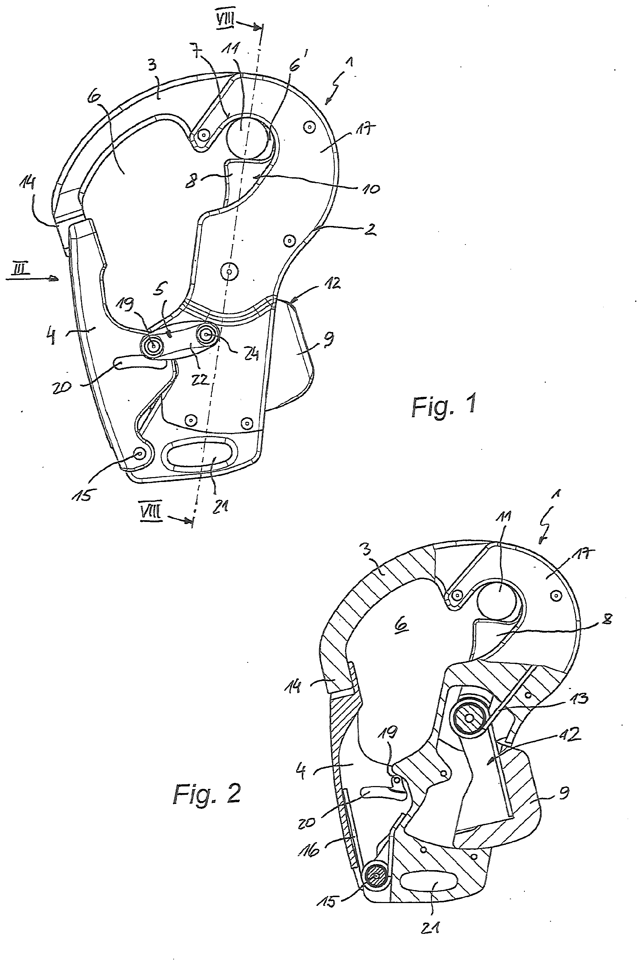

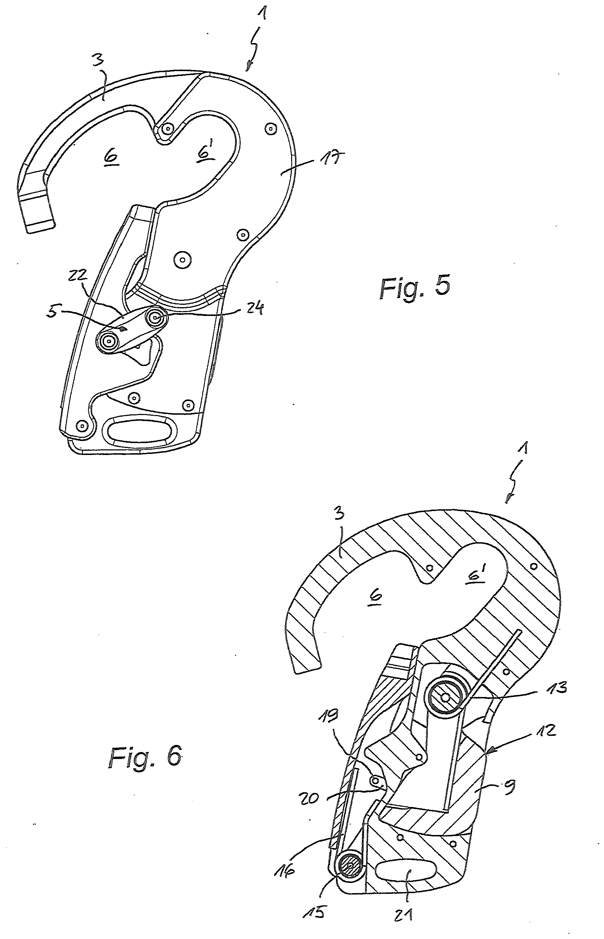

Der in den Fig. 1 bis 8 dargestellte Sicherheitskarabiner 1 besteht im Wesentlichen aus einem Grundkörper 2, der einen Karabinerhaken 3 aufweist, sowie einen am Grundkörper 2 an einer Schwenkachse 15 angelenkten, in Schließrichtung federbelasteten (siehe Feder 16) Schnapper 4, der in Schließstellung am freien Ende 14 des Karabinerhakens 3 anliegt und in dieser Stellung von einem bevorzugt mit dem Daumen betätigbaren, seitlich am Karabiner angeordneten Sperrhebel 5 in dessen Grundstellung blockiert ist. Der Schnapper 4 ist dazu ausgebildet, in Offenstellung (siehe Fig. 5 und 6) einen Aufnahmebereich 6 des Karabiners 1 für die Aufnahme eines Seilelements 11 freizugeben. Innerhalb des Aufnahmebereichs 6 des Sicherheitskarabiners 1 - und somit in den Sicherheitskarabiner 1 integriert - ist eine auf das Seilelement 11 wirkende Seilbremseinrichtung 10 mit einem Aufnahmebereich 6' angeordnet. Der Eingriff auf das Seilelement 11 ist bei Betätigung eines an der Rückseite des Karabiners angeordneten Drückerelements 9 lösbar.

Am Sicherheitskarabiner 1 ist ein separater Sperrhebel 5 für die Freigabe des Schnappers 4 aus dessen Schließstellung angeordnet, wobei das Drückerelement 9 der Seilbremseinrichtung 10 unabhängig von der Stellung des Sperrhebels 5 des Schnappers 4 betätigt werden kann. Der Sperrhebel 5 bzw. dessen Betätigungselement 22 ist bevorzugt seitlich am Karabiner, leicht fassbar für den Daumen der Hand, angeordnet.

Das Drückerelement 9 für die Betätigung der Seilbremseinrichtung 10 ist als ein Arm eines zweiseitigen, im Grundkörper 2 angelenkten Klemmhebels 12 ausgebildet, dessen zweiter Arm als bewegliches, auf das Seilelement 11 wirkendes Klemmelement 8 ausgebildet ist. Das bewegliche Klemmelement 8 wird mit Hilfe einer Feder 13 des Klemmhebels 12 in die Schließstellung der Seilbremseinrichtung 10 (siehe z.B. Fig. 1 und 2) gedrückt und in dieser Stellung fixiert. Geöffnet wird die Seilbremse durch Druckausübung mit dem Daumenballen auf das an der Rückseite angeordnete Drückerelement 9.

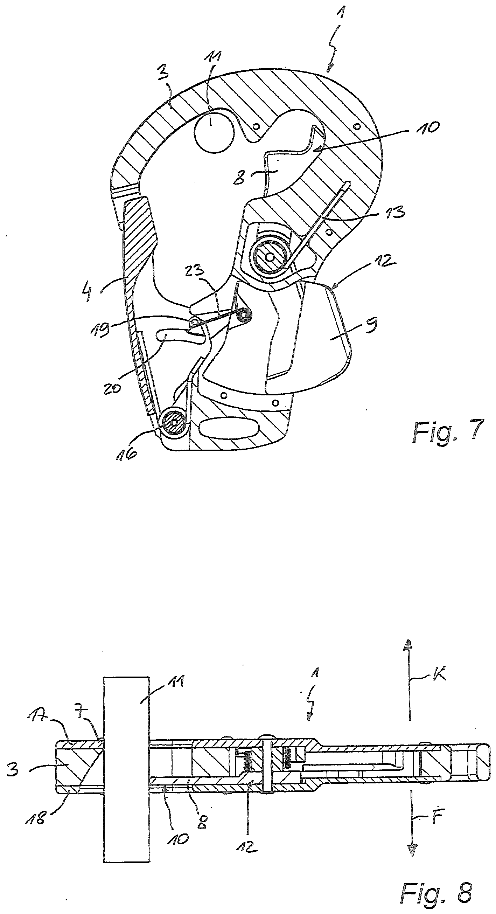

Das bewegliche Klemmelement 8 der Seilbremseinrichtung 10 wirkt zusammen mit einem fixen Klemmelement 7, das am Karabinerhaken 3 ausgebildet oder befestigt ist, asymmetrisch auf das Seilelement 11 ein, derart, dass die Klemmelemente 7, 8 bei einer Kletterbewegung (siehe Pfeil K in Fig. 8) das Seilelement 11 frei geben und bei einer Fallbewegung (siehe Pfeil F in Fig. 8) bremsend in das Seilelement 11 eingreifen.

Der Sperrhebel 5 ist am Grundkörper 2 des Karabiners drehbar (siehe Drehachse 24) angelenkt und wird mittels einer Feder 23 in die Schließstellung bzw. Sperrstellung für den Schnapper 4 gedrückt. Am freien Ende des Sperrhebels 5 ist ein Führungsstift 19 - beispielsweise zwischen zwei Armen des Sperrhebels 5 - angeordnet, der in eine, L-förmige Führungskulisse 20 im Schnapper 4 eingreift. Durch die Kraft der Feder 23 gelangt der Führungsstift 19 bei geschlossenem Schnapper 4 in den Sperrabschnitt der Führungskulisse 20 (siehe Fig. 7), wodurch der Schnapper 4 verriegelt wird.

Zur einfachen Einhand-Betätigung weist der Sperrhebel 5 zumindest an einer Seitenfläche des Karabiners ein für den Daumen fassbares Betätigungselement 22, 22' auf.

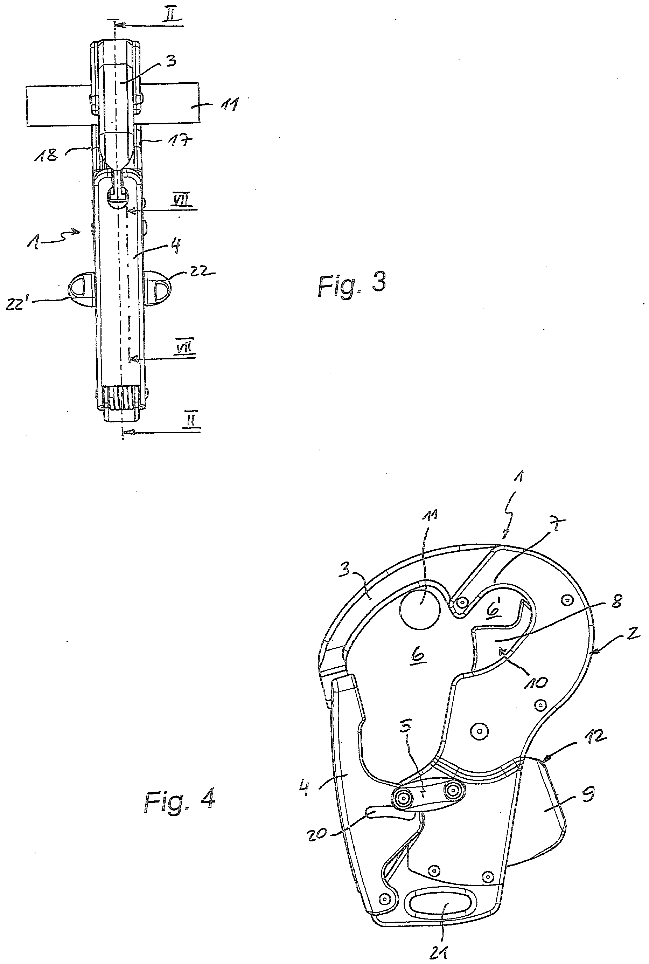

Wie in Fig. 3 dargestellt, kann das Betätigungselement 22 des Sperrhebels 5 - für eine einfache Einhand-Betätigung mit der linken Hand - auch an der gegenüberliegenden Seitenfläche des Karabiners angeordnet sein (siehe Betätigungselement 22'). Von Vorteil ist die Anbringung von Betätigungselementen 22, 22' an beiden Seiten des Karabiners, wodurch der Einsatz des Sicherheitskarabiners 1 für Rechts- und Linkshänder gleichermaßen problemlos gewährleistet ist.

Der Grundkörper 2 des Karabiners kann zumindest im Bereich der Seilbremseinrichtung 10 durch seitlich befestigte Verschlussplatten 17, 18 verstärkt ausgeführt sein. Bevorzugt kann ein Bereich einer der Verschlussplatten 17, 18 als fixes Klemmelement 7 der Seilbremseinrichtung 10 ausgeführt sein. Dadurch können für den Grundkörper und die Elemente der Seilbremseinrichtung unterschiedliche Materialien entsprechend der jeweiligen Belastung eingesetzt werden.

Um die richtige Handhabung beim Einhängen des Sicherheitskarabiners 1 in das Drahtseil am Klettersteig zu erleichtern, können die beiden Verschlussplatten 17, 18 eine unterschiedliche visuelle oder taktile Markierung, beispielsweise eine unterschiedliche Farbkennzeichnung aufweisen. Beispielsweise kann die obere Verschlussplatte 17 eine grüne Kennzeichnung und die untere Verschlussplatte 18 eine rote Kennzeichnung aufweisen.

An dem vom Karabinerhaken 3 abgewandten Ende des Grundkörpers 2 kann eine Öse 21 für ein Sicherungsseil (nicht dargestellt) des Karabiners vorgesehen sein.

In vorteilhafter Weise kann bei einem herkömmlichen Klettersteigset mit zumindest zwei Kletterkarabinern zumindest einer der beiden Kletterkarabiner durch einen erfindungsgemäßen Sicherheitskarabiner 1 mit einer Seilbremseinrichtung 10 ersetzt werden.

Anhand der einzelnen Abbildungen in den Fig. 1 bis 8 soll nun die Funktionsweise des Sicherheitskarabiners 1, beim Anlegen an ein Seilelement 11 dargelegt werden.

Zunächst wird der Schnapper 4 durch Betätigung des Sperrhebels 5 mit dem Daumen entriegelt und anschließend in seine offene Stellung verschwenkt (siehe Fig. 5 und 6). Nach dem Einhängen des Seilelements 11 in den Aufnahmebereich 6 des Karabiners schließt und verriegelt sich der Schnapper 4 mit Hilfe der Federn 23 und 16 automatisch. Die Seilbremseinrichtung 10 gelangt hierbei nicht zur Anwendung (siehe Fig. 4). Auf diese Weise kann der Sicherheitskarabiner 1 wie ein herkömmlicher Klettersteigkarabiner verwendet werden, was vor allem in flachen und einfachen Passagen am Klettersteig benötigt wird.

Bei Verwendung der Seilbremseinrichtung 10 am Klettersteig müssen zu Beginn der Schnapper 4 und die Seilbremseinrichtung 10 geöffnet werden, wobei die Vorgehensweise zur Öffnung des Schnappers 4 bereits oben beschrieben wurde. Die Seilbremseinrichtung wird durch Betätigung des Drückerelements 9 des Klemmhebels 12 am Karabinerrücken geöffnet. Danach kann das Seilelement 11 in den Aufnahmebereich 6' der Seilbremseinrichtung 10 eingehängt werden. Das Schließen von Schnapper 4 und Seilbremseinrichtung 10 erfolgt anschließend selbsttätig durch die in Schließrichtung wirkenden Federn 13, 16 und 23. Ist das Seilelement 11 korrekt in der Seilbremseinrichtung 10 fixiert, lässt sich der Sicherheitskarabiner am Seil nur mehr in Aufwärtsrichtung bewegen (siehe Fig. 8). In die Gegenrichtung werden Bewegungen durch die Hebelwirkung der asymmetrisch angeordneten Klemmelemente 7 und 8 verhindert. Beim Einsatz der Seilbremseinrichtung 10 in steilen und schwierigen Passagen am Klettersteig, wird die mögliche Fallhöhe bei Stürzen wesentlich verringert.

Die Seilbremseinrichtung 10 und der Schnapper 4 des Sicherheitskarabiners 1 lassen sich gänzlich unabhängig voneinander bedienen. Dadurch wird es auch ermöglicht, das Seilelement 11 bei geschlossenem und verriegeltem Schnapper 4 aus dem Aufnahmebereich 6 des Karabiners in die Seilbremseinrichtung 10 und retour zu führen.

## Patentansprüche

1. Sicherheitskarabiner (1) zum Anlegen an ein Seilelement (11), vorzugsweise zum Einsatz an fest verlegten Drahtseilen an Klettersteigen, mit einem Grundkörper (2), der einen Karabinerhaken (3) aufweist, mit einem am Grundkörper (2) angelenkten, in Schließrichtung federbelasteten Schnapper (4), der in Schließstellung am freien Ende des Karabinerhakens (3) anliegt, wobei der Schnapper (4) dazu ausgebildet ist, in Offenstellung einen Aufnahmebereich (6) des Karabiners (1) für die Aufnahme des Seilelements (11) freizugeben, und wobei innerhalb des Aufnahmebereichs (6) eine auf das Seilelement (11) wirkende Seilbremseinrichtung (10) angeordnet ist, deren Eingriff auf das Seilelement (11) bei Betätigung eines an der Rückseite des Karabiners (1) angeordneten Drückerelements (9) lösbar ist, **dadurch gekennzeichnet, dass** am Sicherheitskarabiner (1) ein Sperrhebel (5) für die Freigabe des Schnappers (4) aus dessen Schließstellung angeordnet ist, wobei das Drückerelement (9) der Seilbremseinrichtung (10) unabhängig von der Stellung des Sperrhebels (5) für den Schnapper (4) betätigbar ist.

2. Sicherheitskarabiner (1) nach Anspruch 1, **dadurch gekennzeichnet, dass** das Drückerelement (9) als ein Arm eines zweiseitigen, im Grundkörper (2) angelenkten Klemmhebels (12) ausgebildet ist, dessen zweiter Arm als bewegliches, auf das Seilelement (11) wirkendes Klemmelement (8) der Seilbremseinrichtung (10) ausgebildet ist.

3. Sicherheitskarabiner (1) nach Anspruch 2, **dadurch gekennzeichnet, dass** das bewegliche Klemmelement (8) der Seilbremseinrichtung (10) zusammen mit einem fixen Klemmelement (7) am Karabinerhaken (3) asymmetrisch auf das Seilelement (11) einwirkt, derart, dass die Klemmelemente (7, 8) bei einer Kletterbewegung das Seilelement (11) frei geben und bei einer Fallbewegung bremsend in das Seilelement (11) eingreifen.

4. Sicherheitskarabiner (1) nach einem der Ansprüche 1 bis 3, **dadurch gekennzeichnet, dass** der in Schließstellung federbelastete Sperrhebel (5) am Grundkörper (2) oder am Schnapper (4) drehbar angelenkt ist und mit einem Führungsstift (19) an dessen freiem Ende in eine Führungskulisse (20) im Schnapper (4) oder im Grundkörper (2) eingreift.

5. Sicherheitskarabiner (1) nach einem der Ansprüche 1 bis 4, **dadurch gekennzeichnet, dass** der Sperrhebel (5) zumindest an einer Seitenfläche des Karabiners, bevorzugt an beiden Seitenflächen des Karabiners, ein für den Daumen fassbares Betätigungselement (22, 22') aufweist.

6. Sicherheitskarabiner (1) nach einem der Ansprüche 1 bis 5, **dadurch gekennzeichnet, dass** der Grundkörper (2) des Karabiners zumindest im Bereich der Seilbremseinrichtung (10) durch seitlich befestigte Verschlussplatten (17, 18) verstärkt ausgeführt ist.

7. Sicherheitskarabiner (1) nach Anspruch 6, **dadurch gekennzeichnet, dass** ein Bereich einer der Verschlussplatten (17) als fixes Klemmelement (7) der Seilbremseinrichtung (10) ausgeführt ist.

8. Sicherheitskarabiner (1) nach Anspruch 6 oder 7, **dadurch gekennzeichnet, dass** die beiden Verschlussplatten (17, 18) eine unterschiedliche visuelle oder taktile Markierung, beispielsweise eine unterschiedliche Farbkennzeichnung aufweisen.

9. Sicherheitskarabiner (1) nach einem der Ansprüche 1 bis 8, **dadurch gekennzeichnet, dass** an dem vom Karabinerhaken (3) abgewandten Ende des Grundkörpers (2) eine Öse (21) für ein Sicherungsseil ausgebildet ist.

10. Klettersteigset mit zumindest zwei Kletterkarabinern, **dadurch gekennzeichnet, dass** zumindest einer der beiden Kletterkarabiner durch einen Sicherheitskarabiner (1) mit einer Seilbremseinrichtung (10) nach einem der Ansprüche 1 bis 9 ersetzt ist.
